# EUROPÄISCHE PATENTANMELDUNG

(11) **EP 2 782 200 A1**
(43) Veröffentlichungstag der Anmeldung: **24.09.2014**
(21) Anmeldenummer: 14000982.0
(22) Anmeldetag: 17.03.2014
(51) Int. Cl.: H02G 3/32

(54) **Zugentlastung**

(30) Priorität: 19.03.2013 DE 102013004680
(71) Anmelder: Wieland Electric GmbH, 96052 Bamberg (DE)
(72) Erfinder: Hunger, Rainer, 96103 Hallstadt (DE)
(74) Vertreter: Tergau, Dietrich

(57) **Zusammenfassung**

Zugentlastung (8) zur Klemmfixierung einer elektrischen Leitung zwischen zwei Klemmbacken (2) mit jeweils einer C-förmigen Innenkontur (34) als Anlagefläche, an der Leitung derart, dass die Klemmbacken (2) gegeneinander verschiebbar verbunden sind und die Innenkonturen (34) im Montageendzustand zwischen sich eine Leitungsdurchführung (82) bilden zum Fixieren von Leitungen mit unterschiedlichen Leitungsdurchmessern mit mindestens einer im Montageendzustand zwischen den Klemmbacken (2) angeordnetem Zwischenstück (70) mit zwei einander abgewandten, C-förmigen Innenkonturen (34) zur Bildung jeweils einer Leitungsdurchführung (82) mit der entsprechenden C-förmigen Innenkontur (34) einer benachbarten Klemmbacke (2) oder eines benachbarten Zwischenstücks (70).

## Beschreibung

Die Erfindung betrifft eine Zugentlastung zur Klemmfixierung einer elektrischen Leitung. Derartige Zugentlastungen dienen dem Schutz der Verbindung einer elektrischen Leitung mit einem mit der Leitung verbundenen Anschlussstück. Die Leitung wird dabei an ihrem Mantel bzw. ihrer isolierenden Umhüllung umgriffen, verklemmt und fixiert, so dass insbesondere bei versehentlich oder plötzlich auftretenden Zugbelastungen verhindert wird, dass die Leitung sich vom Anschlussstück löst. Aus dem Stand der Technik bekannte Zugentlastungen ermöglichen darüber hinaus durch zueinander verschiebbare Teile die Fixierung von Leitungen mit unterschiedlich großen Leitungsdurchmessern gegen Zugbelastungen.

Aus der DE 9412042 U1 ist eine Zugentlastung mit separaten Klemmbacken bekannt, wobei die Klemmbacken fingerartig ineinander greifen und senkrecht zur Leitungsachse verschiebbar sind, um an die unterschiedlichen Leitungsdurchmesser angepasst werden zu können. Zur Aufrechterhaltung einer rechtwinklig zur Leitungsachse gerichteten Klemmung durch die Klemmbacken ist ein Gehäuse notwendig.

In der EP 0 653 804 A1 ist eine Zugentlastung bzw. eine Anordnung zur variablen Verklemmung von Leitungen mit zwei Klemmbacken beschrieben, die durch eine hermaphroditische Gestaltung gegenseitig ineinander greifen und dadurch die Verklemmung unabhängig von einem Gehäuse aufrechterhalten.

Der Erfindung liegt die Aufgabe zugrunde, eine Zugentlastung bereitzustellen welches ermöglicht, wahlweise ein oder auch mehrere elektrische Leitungen mit einer Zugentlastung zu fixieren.

Diese Aufgabe wird erfindungsgemäß dadurch gelöst, dass wenigstens ein Zwischenstück vorgesehen ist, bei welchem beidseitig eine C-förmige Innenkontur ausgebildet ist. Beidseitig bildet ein solches Zwischenstück mit jeweils einer Klemmbacke eine Leitungsdurchführung mit variablen Innendurchmesser aus.

Vorteilhafte Ausgestaltungen der Erfindung sind Gegenstand der Unteransprüche.

Die Erfindung geht von der Überlegung aus, dass in vielen Anwendungen bzw. Installationssituationen das Fixieren von mehreren benachbart verlaufenden elektrischen Leitungen notwendig ist. Oft steht dabei aber sehr wenig Bauraum zur Verfügung. Eine Verwendung von bekannten Lösungen mit jeweils zwei Klemmbacken für jede Leitung verlangt allerdings den doppelten Bauraum gegenüber der Konfiguration zur Fixierung nur einer Leitung. Um Bauraum einzusparen, müssten bei den bekannten Klemmbacken die Wanddicken reduziert werden, worunter die Stabilität und Zuverlässigkeit der Klemmbacken leiden würde.

Gemäß der Erfindung, lässt sich eine zuverlässige, unabhängig voneinander wirkende, Verklemmung mehrerer Leitungen unter gleichzeitiger Einsparung von Bauraum erzielen, indem den an sich bekannten Klemmbacken ein speziell ausgebildetes Zwischenstück hinzugefügt wird, welches jeweils mit einer benachbarten Klemmbacke zusammenwirkt, um jeweils eine Leitung klemmend zu fixieren und auf diese Weise eine Zugentlastung zu realisieren. Das Zwischenstück erfüllt dabei gewissermaßen die Funktion von zwei einander abgewandten Klemmbacken und ermöglicht auf diese Weise eine sehr platzsparende und trotzdem stabile und zuverlässige Konfiguration für die Klemmfixierung von zwei benachbarten Leitungen.

Mit der erfindungsmäßigen Zugentlastung ist es möglich, mehrere elektrische Leitungen mit unterschiedlichen Durchmessern und aus unterschiedlichen Materialien parallel anzuschließen und mit einer Zugentlastung zu sichern. Zudem können die Einzelteile der Zugentlastung aus unterschiedlichen Materialen bestehen.

Vorteilhafterweise ist das Zwischenstück so ausgebildet, dass es zur Bildung einer Vielzahl von Kabelkanälen beidseitig mit weiteren Zwischenstücken kombiniert werden kann. Auf diese Weise wird ein Baukastensystem für Zugentlastungen geschaffen, welches zwei oder mehr benachbarte Leitungen fixieren kann. Da jedes Zwischenstück zwei Leitungen zugleich entlastet, sind Installationen mit geringem Bauraum möglich.

In einer bevorzugten Ausführungsform weisen die jeweiligen Klemmbacken und das Zwischenstück Lamellenscheiben mit C-förmigen Innenkonturen auf, die beim Verbinden und Zusammenschieben mit einem weiteren Zwischenstück oder einer Klemmbacke mit dessen Lamellenscheiben fingerartig ineinander greifen. Auf diese Weise wird über den gesamten vorgesehenen Bereich an Leitungsdurchmessern eine maximale Umfassung der Leitung erreicht. Dadurch wird eine gezielte Einleitung von Kräften senkrecht zur Leitungsachse erleichtert und ein stabiler Sitz der verbundenen Klemmteile gewährleistet. Die Gefahr des Eintritts von Fremdkörpern in das Gehäuse über die Zugentlastung wird ebenfalls minimiert.

Für eine möglichst flexible Einsetzbarkeit sind die Klemmbacken vorzugsweise spiegelbildlich ausgestaltet und weisen an ihren Außenflächen jeweils gerichtete Verzahnungen auf, so dass im zusammengeschobenen Zustand von zwei Klemmbacken oder einer Klemmbacke und einem Zwischenstück oder zwei benachbarte Zwischenstücke deren Verzahnungen ein Rastgesperre miteinander ausbilden. Dadurch wird auch eine besonders starke Verklemmung der jeweiligen Leitungen ermöglicht.

Zur beidseitigen Verrastung mit jeweils einer Klemmbacke weist das Zwischenstück an seiner Außenfläche vorteilhafterweise beidseitig jeweils eine Verzahnung auf, welche beim Zusammenschieben mit einer Klemmbacke mit einer entsprechenden komplementären Verzahnung an der Klemmbacke ein Rastgesperre ausbildet.

In einer bevorzugten Ausführung weist die Zugentlastung genau ein Zwischenstück auf. Ein derartiges System eignet sich zur bedarfsweisen Fixierung von einem oder zwei Leitungen.

Die Klemmbacken und/oder das Zwischenstück sind bevorzugt aus Kunststoff gefertigt, Insbesondere gespritzt.

Um eine zielgerichtete Einleitung der zum Klemmen der Leitung notwendigen Kraft senkrecht zur Leitungsachse zu ermöglichen, sind die Klemmbacken vorteilhaft U-förmig ausgestaltet mit einer planen Außenfläche und zwei dazu senkrecht verlaufenden U-Schenkeln. Auf die plane Außenfläche kann beim Zusammendrücken gleichmäßig und kontrolliert der nötige Druck ausgeübt werden.

Die Vorteile der Erfindung liegen insbesondere darin, dass die Zugentlastung von seinem Benutzer bedarfsweise selbständig konfiguriert werden kann, so dass wahlweise ein oder zwei Leitungen auf engstem Bauraum fixiert werden können. Bei einer Fixierung von zwei Leitungen mit Hilfe des Zwischenstücks sind die beiden Leitungsdurchführungen für die jeweilige Leitung auf den jeweils minimalen Durchmesser einstellbar.

Die als Rastgesperre wirksamen Verzahnungen ermöglichen dabei ein schrittweises Verkleinern des Durchmessers der Leitungsdurchführung gemäß dem durch den Zahnabstand der jeweiligen Sperrzähne definierten Modul der Verzahnung.

Durch die Ausbildung des Zwischenstückes zur Verbindung mit benachbarten Zwischenstücken wird eine modulare Zugentlastung bereitgestellt, welche zur Fixierung von zwei oder mehr Leitungen baukastenartig erweitert werden kann.

Mit U-förmig ausgebildeten Klemmbacken mit ebenen Flächen kann effektiv und komfortabel die zur radialen Leitungsklemmung erforderliche Kraft eingeleitet werden.

Die Zugentlastung lässt sich für elektrische Leitungen und ähnliche, für eine radiale Verklemmung geeignete Zuleitungen verwenden, welche in Gehäuse, insbesondere von Steckverbindern, integriert werden oder an diesen montiert werden. Ein Ausführungsbeispiel der Erfindung wird anhand einer Zeichnung näher erläutert. Darin zeigen in stark schematisierter Darstellung:
- Fig. 1: zwei Klemmbacken einer Zugentlastung in einer bevorzugten Ausführungsform in einer perspektivischen Darstellung,
- Fig. 2: die zwei Klemmbacken aus Fig. 1 sowie ein Zwischenstück der Zugentlastung in einer perspektivischen Darstellung,
- Fig. 3,: die zwei Klemmbacken gemäß Fig. 1 in zusammengesetztem Zustand, und
- Fig. 4: die zwei Klemmbacken und das Zwischenstück gemäß Fig. 2 in zusammengesetztem Zustand.

Gleiche Teile sind in allen Figuren mit denselben Bezugszeichen versehen.

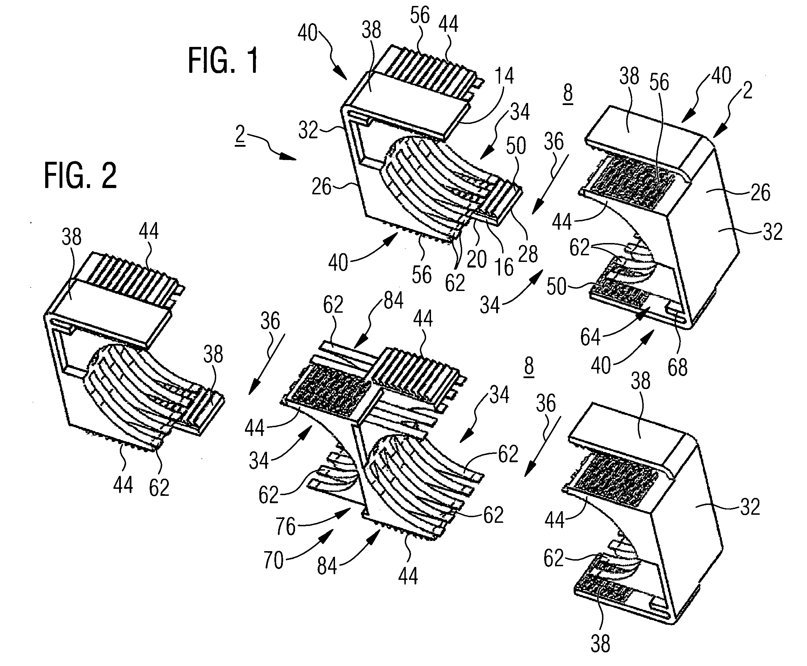

Die in Fig. 1 auf der linken Seite dargestellte Klemmbacke 2 einer Zugentlastung 8 ist U-förmig ausgebildet mit zwei Schenkeln 14, 20. Die Schenkeln 14, 20 verbindendes Querjoch 26 ist an einer Außenfläche 32 plan bzw. eben ausgebildet. Von den Schenkeln 14, 20 und dem Querjoch 26 ist eine C-förmig ausgebildete Innenkontur 34 umfasst bzw. gebildet, die parallel zu einer Hauptachse 36 einer zu klemmenden Leitung (nicht dargestellt) verläuft.

Die Klemmbacke 2 ist so ausgebildet, dass sie mit einer in Fig. 1 rechts dargestellten identischen und spiegelbildlich verdrehten Klemmbacke 2 verbunden wer den kann. Dazu weist jede Klemmbacke 2 an den Außenflächen 40 der Schenkel 14, 16 jeweils eine Innenverzahnung 38 mit zur Innenkontur 34 gerichteten Sperrzähnen 50 und eine benachbart dazu angeordnete Außenverzahnung 44 mit nach außen gerichteten Sperrzähnen 56 auf. In der Innenkontur 34 sind Lamellenschelben 62 angeordnet, die C-förmig gekrümmt entlang der Innenkontur 34 und senkrecht zur Hauptachse 36 verlaufen.

Beim Zusammenschieben der beiden Klemmbacken 2 bilden deren beiden Innenkonturen 34 einen runde Durchführung bzw. Leitungsdurchführung 82, in dem die entlang der Hauptachse 36 verlaufende Leitung verklemmt wird. Bei diesem Vorgang kann senkrecht zur Hauptachse über die planen Außenflächen 32 Kraft auf die Klemmbacken 2 ausgeübt werden. Die jeweilige Innenverzahnung 38 schiebt sich dabei über die jeweils gegenüberliegende Außenverzahnung 44 der benachbarten Klemmbacke 2, so dass die Sperrzähne 50, 56 ineinandergreifen und dadurch eine Verrastung der beiden Klemmbacken 2 mittels eines Zahnrichtgesperres erfolgt. Die in den jeweiligen Innenkonturen 34 der einander gegenüberliegenden Klemmbacken 2 angeordneten Lamellenscheiben 62 greifen dabei ineinander, wodurch eine Führung der beiden Klemmbacken 2 während des Einklemmvorgangs der Leitung erreicht wird. Die Lamellenscheiben 62 sind zu diesem Zweck so angeordnet, dass zwischen ihnen Lücken freigelassen sind, in welche die Lamellenscheiben 62 der anderen Klemmbacke 2 eingeschoben werden können.

Zwischen jeder Innenverzahnungen 38 und den benachbart verlaufenden Lamellenscheiben 62 ist ein Aufnahmebereich 64 gebildet, der bei einer Verrastung die entsprechende Gegenverzahnung, also eine Außenverzahnung 44 aufnimmt. In diesem Aufnahmebereich 64 ist weiterhin ein parallel zur Verzahnung 38 verlaufender Vorsprung bzw. Bügel 68 ausgebildet.

Die Zugentlastung 8 ist dazu ertüchtigt, bedarfsweise mehr als ein Kabel zu fixieren. Dazu ist ein in Fig. 2 zwischen den Klemmbacken 2 dargestelltes Zwischenstück 70 vorgesehen, welches zwischen den Klemmbacken 2 eingesetzt werden kann und mit ihnen verrastbar ist. Das Zwischenstück 70 ist derart ausgebildet, dass es beidseitig eine C-förmige Innenkontur 34 ausbildet, die jeweils mit der C-förmigen Innenkontur 34 einer Klemmbacke 2 eine Leitungsdurchführung 82 für eine elektrische Leitung bildet. In der jeweiligen Innenkontur 34 sind, wie bei den Klemmbacken 2, Lamellenscheiben 62 angeordnet. Zur Verrastung mit den Klemmbacken 2 weist das Zwischenstück an beiden Enden bzw. äußeren Randbereichen 84 der jeweiligen Innenkontur 34 jeweils eine Außenverzahnung 44 auf, welche im zusammengesetzten Zustand mit einer Innenverzahnung 38 der jeweiligen Klemmbacke 2 verrastet. Aufgrund der Ausgestaltung der Klemmbacken 2 sind auf dem jeweiligen T-Querbalken des Doppel-T-förmigen Zwischenstücks 70 zwei parallel und diagonal bezüglich der Hauptachse 36 zueinander versetze Außenverzahnungen 44, zu den beiden Innenverzahnungen 38 der Klemmbacken 2 komplementär ausgebildet. Die Lamellenscheiben 62 sind wiederum so angeordnet, dass diese beim Zusammenschieben mit den Lamellenscheiben 62 der Klemmbacke 2 fingerartig ineinandergreifen.

Die Anordnung der Rastgeometrien, d.h. der Innenverzahnung 38 und der Außenverzahnungen 44 von der Klemmbacke 2 und vom Zwischenstück 70, sind derart ausgeführt, dass sich bei minimalem Bauraumverlust aufgrund der Ausdehnung des Zwischenstückes 70 senkrecht zur Hauptachse 36 keine gegenseitigen Einschränkungen bei verschiedenen Leitungsdurchmessern ergeben.

Mit anderen Worten; auch bei Verwendung des Zwischenstückes 70 lassen sich Leitungen mit denjenigen Leitungsdurchmessern klemmen, die auch zwischen zwei Klemmbacken 2 allein eingespannt werden können. Um bei der Fixierung von zwei Leitungen mit Hilfe des Zwischenstückes 70 möglichst wenig zusätzlichen Bauraum in lateraler Richtung zur Hauptachse 36 zu verbrauchen, grenzen die beiden von dem Zwischenstück 70 gebildeten Innenkonturen 34 in dem Mittelbereich 76 des Zwischenstückes 70 eng aneinander. Die Dicke dieses Mittelbereiches 76 ist dabei so gewählt, dass noch genügende Materialstabilität gegeben ist.

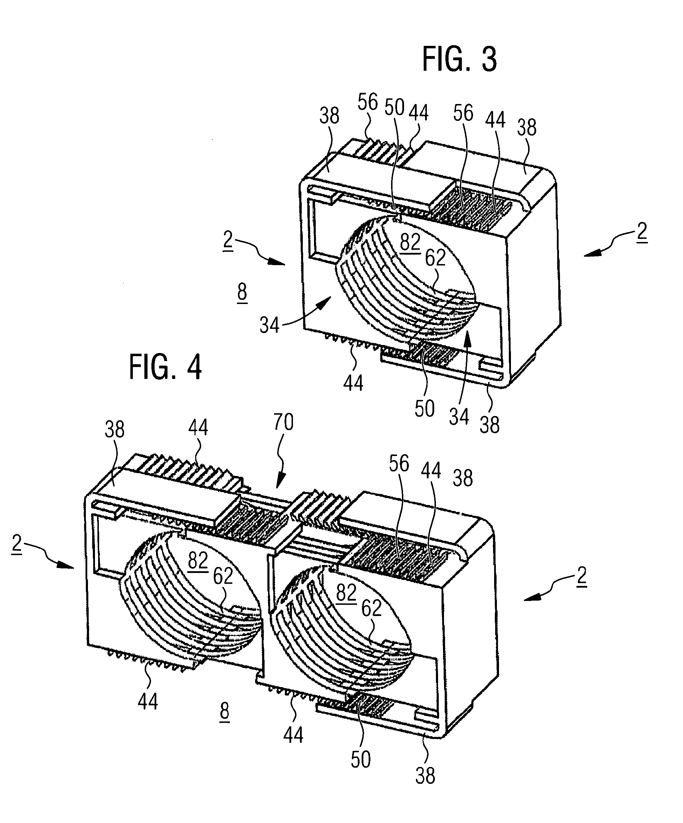

Zwei miteinander verrastete Klemmbacken 2 der Zugentlastung 8 sind in Fig. 3 dargestellt. Dabei werden jeweils die Außenverzahnungen 44 der einen Klemmbacke 2 von den Innenverzahnungen 38 der anderen Klemmbacken 2 aufgenommen in der Weise, das die nach außen gerichteten Sperrzähne 56 der Außenverzahnungen 44 mit den nach innen bzw. zur Innenkontur 34 hin gerichteten Sperrzähnen 50 der Innenverzahnungen 38 verrasten, wodurch eine Rastverbindung der beiden Klemmbacken 2 mittels eines Gesperres realisiert wird. Die Lamellenscheiben 62 der beiden Klemmbacken 2 greifen im zusammengesetzten Zustand nach Art von Fingern betender Hände ineinander, so dass jeweils benachbart eine Lamellenscheibe 62 der einen Klemmbacke 2 neben einer Lammelenscheibe 62 der anderen Klemmbacke 2 zu liegen kommt Die beiden Innenkonturen 34 bilden dabei eine Leitungsdurchführung 82 für eine zu fixierende Leitung.

Zwei Klemmbacken 2 und ein Zwischenstück 70 sind im zusammengesetzten Zustand in Fig. 4 dargestellt. Die Außenverzahnungen 44 des Zwischenstücks 70 werden dabei jeweils von Innenverzahnungen 38 der Klemmbacken 2 aufgenommen, während die jeweils zu den Innenverzahnungen 38 der Klemmbacken 2 benachbarten Außenverzahnungen 44 frei bleiben. Bei der in Fig. 4 dargestellten Konfiguration können zwei benachbarte elektrische Leitungen fixiert werden, wobei die mittels der Verrastung einstellbaren Leitungs-durchmesser den gleichen Einstellbereich umfassen wie bei der Fixierung nur einer Leitung mittels zweier Klemmbacken 2. Mit der Erfindung ist es somit auch möglich in den nebeneinander angeordneten Leitungsdurchführungen 82 Leitungen mit unterschiedlichen Durchmessern zu klemmen. Dies gilt auch für Konfigurationen mit mehreren nebeneinander angeordneten Zwischenstücken 70.

### Bezugszeichenliste

- 2: Klemmbacken
- 8: Zugentlastung
- 14: Schenkel
- 20: Schenkel
- 26: Querjoch
- 32: Außenfläche
- 34: Innenkontur
- 36: Hauptachse
- 38: Innenverzahnung
- 40: Außenfläche
- 44: Außenverzahnung
- 50: Sperrzähne
- 56: Sperrzähne
- 62: Lamellenscheibe
- 64: Aufnahmebereich
- 68: Bügel
- 70: Zwischenstück
- 76: Mittelbereich
- 82: Leitungsdurchführung
- 84: Randbereich

## Patentansprüche

1. Zugentlastung (8) zu Klemmfixierung einer elektrischen Leitung zwischen zwei Klemmbacken (2) mit jeweils einer C-förmigen Innenkontur (34) als Anlagefläche an der Leitung derart, dass die Klemmbacken (2) gegeneinander verschiebbar verbunden sind und die Innenkonturen (34) im Montageendzustand zwischen sich eine Leitungsdurchführung (82) bilden zum Fixieren von Leitungen mit unterschiedlichen Leitungsdurchmessern
**gekennzeichnet durch** mindestens ein im Montageendzustand zwischen den Klemmbacken (2) angeordnetes Zwischenstück (70) mit zwei einander abgewandten, C-förmigen Innenkonturen (34) zur Bildung jeweils einer Leitungsdurchführung (82) mit der entsprechenden C-förmigen Innenkontur (34) einer benachbarten Klemmbacke (2) oder eines benachbarten Zwischenstücks (70).

2. Zugentlastung (8) nach Anspruch 1
**dadurch gekennzeichnet,**
**dass** die Klemmbacken (2) und die Zwischenstücke (70) jeweils als Pakete mit Abstand nebeneinander angeordneter, C-förmigen Lamellenscheiben (62) ausgebildet sind derart, dass die Lammellenscheiben (62) zweier benachbarter Klemmbacken (2) und / oder Zwischenstücke (70) nach Art von Fingern zweier betender Hände ineinander greifen.

3. Zugentlastung (8) nach Anspruch 1 oder 2
**gekennzeichnet durch** Klemmbacken (2) mit jeweils einer der Innenkontur (34) zugewandtem Innenverzahnung (38) auf den Außenflächen der U-Schenkel und mit einer neben der Innenverzahnung (38) parallel verlaufenden, der Innenkontur (34) abgewandten Außenverzahnungen (44) derart, dass die Innenverzahnung (38) und die Außenverzahnung (44) komplementär zueinander ausgebildet sind und jeweils gerichtete Sperrzähne (50, 56) aufweisen und die jeweils ineinandergreifenden Innenverzahnungen (38) und Außenverzahnungen (44) zweier spiegelverkehrt miteinander verbundener Klemmbacken (2) ineinander greifen und ein Zahnrichtgesperre bilden.

4. Zugentlastung (8) nach einem der Ansprüche 1 bis 3
**Gekennzeichnet durch** Zwischenstücke (80) mit einer Doppel-T-Träger-förmigen Außenkontur, wobei die T-Querbalken auf ihren Außenflächen jeweils zwei parallel verlaufende, diagonal zueinander versetzte, den Innenkonturen (34) abgewandte Außenverzahnungen (44) tragen.

5. Zugentlastung (8) nach Anspruch 4
**gekennzeichnet durch** jeweils zwei entgegengesetzte Paare von nebeneinander angeordneten, parallel laufenden Innenverzahnungen (38) und Außenverzahnungen (44) auf den Außenflächen der T-Querbalken, welche im Montageendzustand in entsprechende komplementäre Verzahnungen (38, 44) der benachbarten Klemmbacke (2) oder des benachbarten Zwischenstücks (80) eingreifen und ein Zahnrichtgesperre ausbilden.
